# EUROPEAN PATENT SPECIFICATION

(11) **EP 2 946 995 B1**
(45) Date of publication and mention of the grant of the patent: **21.03.2018**
(21) Application number: 14863573.3
(22) Date of filing: 20.10.2014
(51) Int. Cl.: B62M 7/02, B62K 11/04, F02B 61/02, F16F 1/36, F16F 15/08, B62M 7/04, F16F 1/38, B62K 19/30

(54) **SADDLE-TYPE VEHICLE**
SATTELFAHRZEUG
VÉHICULE DE TYPE À SELLE

(30) Priority: 22.11.2013 JP 2013241567
(43) Date of publication of application: 25.11.2015
(73) Proprietor: Yamaha Hatsudoki Kabushiki Kaisha, Iwata-shi, Shizuoka 438-8501 (JP)
(72) Inventor: HAYAMA, Yoshifumi, Iwata-shi Shizuoka 438-8501 (JP)
(74) Representative: Moreland, David
(86) International application number: PCT/JP2014/077837
(87) International publication number: WO 2015/076046

(56) References cited:
- EP-A2- 2 000 697
- WO-A1-2008/123059
- CA-A1- 2 435 021
- JP-A- S58 174 073
- JP-A- 2005 263 095
- JP-A- 2011 148 448
- JP-A- 2012 240 491
- JP-A- 2013 133 026
- JP-A- 2013 231 478
- US-A- 6 053 272
- US-A1- 2003 030 201
- US-B1- 8 267 417

## Description

### FIELD OF INVENTION

The present invention relates to a saddle-type vehicle including a damper mount interposed between an engine and a vehicle body frame.

### BACKGROUND TO INVENTION

Japanese Utility Model JP H04-26893(U) discloses a motorcycle including an engine attaching device that attaches an engine to the vehicle body.

As shown in Figure 3 of Japanese Utility Model JP H04-26893(U), the engine attaching device includes an inner tube, a cylindrical elastic member surrounding the inner tube, and an outer tube surrounding the elastic member. As shown in Figure 2 of Japanese Utility Model JP H04-26893(U), a power unit including an engine is joined to a joint member. The outer tube of the engine attaching device is fitted inside a holding tube that is integral with the joint member, and there is no space between the outer tube and holding tube. However, a detailed method of fitting the outer tube inside the holding tube is not disclosed.

On the assumption that the outer tube is press-fitted into the holding tube, a jig to be used to perform the press-fitting work is needed, and the work takes more time compared with "clearance fit (the outer diameter of the outer tube is smaller than the inner diameter of the holding tube)". In the case of clearance fit, backlash is caused by the space between the outer peripheral surface of the outer tube and the inner peripheral surface of the holding tube.

Therefore, an object of the present invention is to provide a saddle-type vehicle including a damper mount that includes a mount housing to be easily attached to one of an engine and a vehicle body frame, and realizes a high joint strength of the mount housing.

CA 2 435 021 A1 (Bombardier), which is considered as the closest prior art, discloses an engine mount for a vehicle, such as a snowmobile, that can be used when space for the engine within a chassis is limited and which is easily accessed from the side of the chassis for assembly and repair. The engine mount can be attached to the bottom of an engine that is positioned within a chassis. The engine mount can include four hollow, cylindrical portions. Each cylindrical portion having an axis extending transverse to the longitudinal direction of the snowmobile chassis and receiving a damping mount. Fasteners can be inserted through the chassis to couple with the damping mounts and cylindrical portions in a direction that is transverse to the longitudinal direction of the chassis. The configuration of the damping mounts permits effective damping especially in a direction transverse to the direction of forward travel of the vehicle.

### SUMMARY OF INVENTION

Various aspects of the present invention are defined in the appended claims.

A preferred embodiment of the present invention provides a saddle-type vehicle including an engine, a damper mount attached to the engine, and a vehicle body frame that supports the engine via the damper mount. The damper mount includes a cylindrical mount housing joined to one of the engine and the vehicle body frame, a cylindrical elastic body disposed inside the mount housing, and an inner cylinder that is disposed inside the elastic body and joined to the other one of the engine and the vehicle body frame. The mount housing includes a male screw screwed to a female screw provided on one of the engine and the vehicle body frame, and a tool attaching portion to which a tool is attached when screwing the male screw to the female screw.

With this arrangement, the engine is supported by the vehicle body frame via the damper mount. A mount housing of the damper mount is joined to one of the engine and the vehicle body frame, and the inner cylinder of the damper mount is joined to the other one of the engine and the vehicle body frame. The mount housing and the inner cylinder are joined via an elastic body that is elastically deformable. Accordingly, the engine is elastically supported by the vehicle body frame. Therefore, vibrations to be transmitted between the engine and the vehicle body frame are damped, so that vibrations of the engine and the vehicle body frame are reduced.

The male screw of the mount housing is screwed to the female screw provided on one of the engine and the vehicle body frame. Therefore, as compared with clearance fit, the joint strength of the mount housing to one of the engine and the vehicle body frame is high. Further, a tool attaching portion to which a tool is attached when screwing the male screw to the female screw is provided on the mount housing. Therefore, it is possible that the mount housing is attached to one of the engine and the vehicle body frame by directly attaching a tool to the mount housing. Therefore, an exclusive jig, etc., are not needed, and the time to be taken for attachment can be shortened. Therefore, the mount housing is easily attached.

In the present invention, which is defined by claim 1, the mount housing further includes a cylindrical portion on the outer periphery of which the male screw is provided, and an annular outer flange portion that projects outward in the radial direction from the cylindrical portion. One of the engine and the vehicle body frame includes a stopper portion that faces the outer flange portion in a screw insertion direction of the male screw into the female screw. When the mount housing reaches a joining position at which the mount housing is joined to one of the engine and the vehicle body frame, the stopper portion restricts the mount housing from moving in the screw insertion direction by contact with the outer flange portion.

With this arrangement, an annular outer flange portion that projects outward in the radial direction from the cylindrical portion is provided on the mount housing. Further, a stopper portion that faces the outer flange portion in the insertion direction of the male screw (screw insertion direction) into the female screw is provided on one of the engine and the vehicle body frame. The stopper portion is disposed on the side of the screw insertion direction with respect to the outer flange portion. When the mount housing reaches a joining position at which the mount housing is joined to one of the engine and the vehicle body frame, the stopper portion and the outer flange portion come into contact with each other, and the mount housing is restricted from moving in the screw insertion direction by the stopper portion. Accordingly, the mount housing is reliably disposed at a desired position (joining position) by the stopper portion and the outer flange portion. Therefore, the mount housing can be fixed to a fixed position.

In a preferred embodiment of the present invention, the tool attaching portion and the outer flange portion may be disposed between the engine and the stopper portion in the vehicle width direction.

With this arrangement, the tool attaching portion and the outer flange portion are disposed between the engine and the stopper portion, so that the damper mount is restricted from moving in the vehicle width direction by the engine and the stopper portion. Therefore, the damper mount can be reliably held between the engine and the stopper portion.

In a preferred embodiment of the present invention, the tool attaching portion and the outer flange portion may be disposed on the outer side of the engine and the stopper portion with respect to a vehicle width direction.

With this arrangement, the tool attaching portion and the outer flange portion are disposed on the outer side of the engine and the stopper portion in the vehicle width direction, so that the damper mount can be detached from the saddle-type vehicle without detaching the engine from the vehicle body frame.

Therefore, the loads of maintenance work to replace the existing damper mount with a new damper mount and tuning work to replace the existing damper mount with a damper mount with different damper characteristics are reduced.

In a preferred embodiment of the present invention, the damper mount may further include an outer cylinder that is disposed between the mount housing and the elastic body and press-fitted into the mount housing.

With this arrangement, the outer cylinder to be press-fitted into the mount housing is provided in the damper mount. The mount housing is a comparatively small-sized component. Therefore, the outer cylinder is press-fitted into the comparatively small-sized component. Accordingly, handling of the component is easier and the press-fitting work is more easily performed than in the case where the outer cylinder is press-fitted into a large-sized component such as the vehicle body frame. Therefore, the load of press-fitting work can be reduced.

In a preferred embodiment of the present invention, the outer cylinder may be press-fitted into the mount housing in a state where the inner cylinder and the elastic body are held by the outer cylinder.

With this arrangement, the inner cylinder and the elastic body are held by the outer cylinder, and the outer cylinder, the elastic body, and the inner cylinder are integrated together. When assembling the damper mount, this integrated unit is attached to the mount housing. That is, the outer cylinder is press-fitted into the mount housing in a state where the inner cylinder and the elastic body are held by the outer cylinder. Thus, the inner cylinder and the elastic body can be disposed inside the mount housing by just press-fitting the outer cylinder into the mount housing, so that the load of assembling work can be reduced.

In a preferred embodiment of the present invention, the engine may be mounted to the vehicle body frame at a plurality of mount positions away from each other in the front-rear direction. The damper mount may be disposed at the foremost mount position among the plurality of mount positions.

With this arrangement, the engine is mounted to the vehicle body frame at the plurality of mount positions away from each other in the front-rear direction. The damper mount is disposed at the foremost mount position among the plurality of mount positions. The handle is normally disposed at a more forward position than that of the engine. Therefore, the damper mount is disposed at a position closest to the handle among the plurality of mount positions. Therefore, vibrations to be transmitted from the engine to the handle via the vehicle body frame can be effectively reduced. Accordingly, vibrations to be transmitted from the handle to a driver can be reduced, and the comfort of the driver can be improved.

In a preferred embodiment of the present invention, the mount housing may be joined to the vehicle body frame. In this case, the inner cylinder is joined to the vehicle body frame via the mount housing.

In the case where the mount housing of the damper mount is joined to the engine, the mount frame of the vehicle body frame is on the outer side of the engine in the vehicle width direction, so that unless the engine is detached from the vehicle body frame, it is difficult to detach the mount housing. On the other hand, in the case where the mount housing of the damper mount is joined to the vehicle body frame, the damper mount can be disposed so that the damper mount can be detached without detaching the engine from the vehicle body frame. Therefore, the damper mount is easily replaced.

In a preferred embodiment of the present invention, the vehicle body frame may include a head pipe that supports a front fork, a down frame extending rearward and downward from the head pipe, and a first mount frame fixed to the down frame and disposed on the lateral side of the engine. The mount housing may be fixed to the first mount frame.

With this arrangement, the first mount frame of the vehicle body frame is disposed on the outer side of the engine with respect to the vehicle width direction, and the mount housing is fixed to this first mount frame. The first mount frame is fixed to a down frame that extends rearward and downward from a head pipe that supports a front fork. Therefore, the first mount frame is disposed at a position comparatively close to the handle. Since the damper mount is fixed to the first mount frame, the damper mount is disposed at a position comparatively close to the handle. Accordingly, vibrations to be transmitted from the engine to the handle via the vehicle body frame can be effectively reduced.

In a preferred embodiment of the present invention, the mount housing may be joined to the engine. In this case, the inner cylinder is joined to the engine via the mount housing.

With this arrangement, the mount housing of the damper mount is joined to the engine. That is, the male screw of the mount housing is screwed to the female screw provided on the engine. The engine is smaller than the vehicle body frame. If the component to which the mount housing is screwed is large, the workability may be deteriorated. Therefore, the workability can be improved by joining the mount housing to an engine smaller in size than the vehicle body frame.

In a preferred embodiment of the present invention, the damper mount may overlap one of a cylinder head and a head cover of the engine in a side view of the vehicle.

With this arrangement, the damper mount overlaps one of the cylinder head and the head cover in a side view of the vehicle. An air-fuel mixture burns in a combustion chamber of the cylinder head, so that the cylinder head vibrates. Therefore, the damper mount is disposed close to a source of the vibration. Therefore, vibrations to be transmitted between the engine and the vehicle body frame can be effectively damped.

The aforementioned or other objects, features, and effects of the present invention will become more apparent from the following description of the preferred embodiments with reference to the accompanying drawings.

### BRIEF DESCRIPTION OF DRAWINGS

- **Figure 1**: a schematic view of a saddle-type vehicle according to a first preferred embodiment of the present invention from the left side;
- **Figure 2**: a schematic view of a vehicle body frame and an engine from the front side;
- **Figure 3**: a schematic view of the vehicle body frame and the engine from the left side;
- **Figure 4**: a perspective view of a damper mount seen from the front side of the damper mount;
- **Figure 5**: a perspective view of the damper mount seen from the rear surface side of the damper mount;
- **Figure 6**: a section of the damper mount along a plane including the diameter of the damper mount;
- **Figure 7**: the front surface, side surface, and rear surface of the damper mount. The left drawing of Figure 7 is a front view of the damper mount, the right drawing of Figure 7 is a back view of the damper mount, and the central drawing of Figure 7 is a side view of the damper mount showing a portion higher than the centerline in section;
- **Figure 8A**: a state before an outer cylinder is press-fitted into a mount housing;
- **Figure 8B**: a state where the mount housing is joined to the vehicle body frame by using a tool;
- **Figure 8C**: a state before a mount bolt is attached to the damper mount;
- **Figure 9**: sections of an engine, a vehicle body frame, and a damper mount according to a second preferred embodiment along a vertical plane perpendicular to the center in the width direction;
- **Figure 10**: a section of a damper mount according to a third preferred embodiment of the present invention; and
- **Figure 11**: a section of a damper mount according to a fourth preferred embodiment of the present invention.

### DETAILED DESCRIPTION OF PREFERRED EMBODIMENTS

The front-rear, up-down, and right-left directions in the following description are based on the point of view of a driver when the saddle-type vehicle is in a reference posture equivalent to a state where the saddle-type vehicle travels in a straight line on a horizontal plane and the driver looks forward. The right-left direction is equivalent to the vehicle width direction. The term "center in the width direction" is equivalent to "a vertical plane that passes through the centerline of the head pipe and is perpendicular to the rotation axis of the rear wheel." The term "inward in the vehicle width direction" means "a direction approaching the center in the width direction," and the term "outward in the vehicle width direction" means "a direction away from the center in the width direction." Hereinafter, a saddle-type vehicle in the reference posture is described.

### First Preferred Embodiment

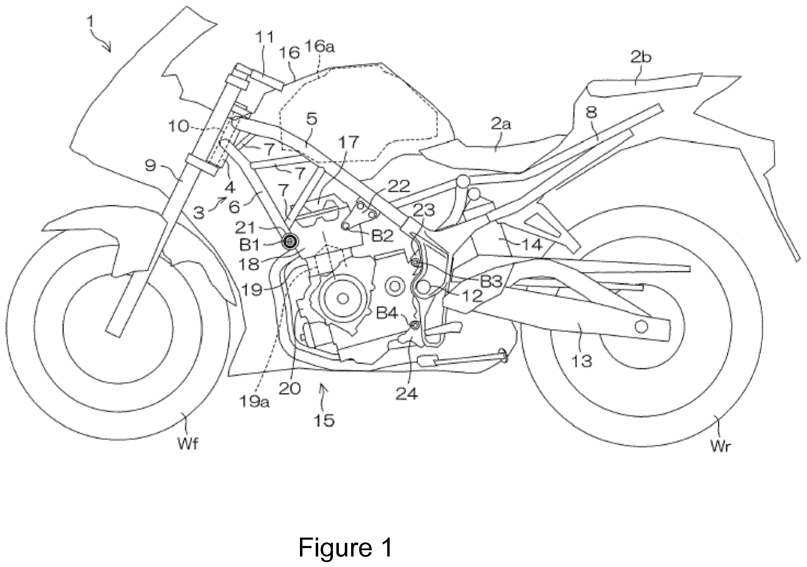

As shown in Figure 1, a saddle-type vehicle 1 includes a vehicle body frame 3, and a straddled seat 2a disposed above the vehicle body frame 3.

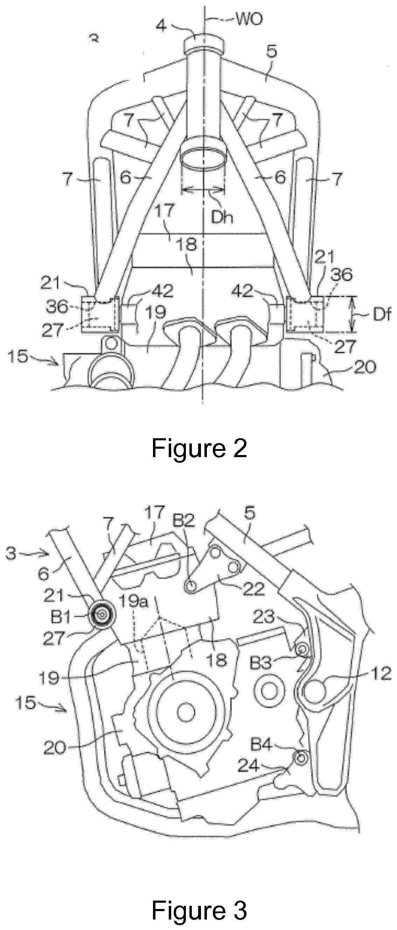

As shown in Figure 1 and Figure 2, the vehicle body frame 3 includes a head pipe 4 extending rearward and upward, a pair of right and left main frames 5 extending rearward from the head pipe 4, a pair of right and left down frames 6 extending rearward and downward from the head pipe 4 and disposed below the pair of main frames 5 in a side view of the vehicle. The vehicle body frame 3 further includes a plurality of auxiliary frames 7 that join the main frames 5 and the down frames 6, and a pair of seat frames 8 extending rearward and upward from the main frames 5.

As shown in Figure 2, the head pipe 4 is disposed at the center of the saddle-type vehicle 1 in the vehicle width direction. The pair of main frames 5 are disposed on the right side and the left side of the center WO in the width direction, respectively. The same applies to the pair of down frames 6 and the pair of seat frames 8. The main frames 5 and the down frames 6 are joined to one end portions and the other end portions of the auxiliary frames 7, respectively. The frames 5 to 8 are formed of pipes having cylindrical outer peripheral surfaces. The outer peripheral surfaces of the frames 5 to 8 are not limited to be circular in section, but may be rectangular in section.

As shown in Figure 1, the seat 2a is disposed above the pair of seat frames 8. The seat 2a is disposed on the rear side of the head pipe 4. The seat 2a is supported by the pair of seat frames 8. The seat 2a extends in the front-rear direction. The seat 2a is a driver seat on which a driver sits. The saddle-type vehicle 1 may include a tandem seat 2b on which a fellow passenger sits. In this case, the tandem seat 2b may be integrated with the driver seat, or may be a seat separate from the driver seat. Figure 1 shows an example in which the tandem seat 2b is separate from the driver seat 2a. The tandem seat 2b is disposed at a position more rearward than the seat 2a and higher than that of the seat 2a. The tandem seat 2b is disposed above the pair of seat frames 8 and supported by the pair of seat frames 8.

As shown in Figure 1, the saddle-type vehicle 1 includes a front fork 9 supported by the vehicle body frame 3, a front wheel Wf supported rotatably by the front fork 9, and a handle 11 to be operated by a driver.

As shown in Figure 1, the front fork 9 rotatably supports the front wheel Wf. The front fork 9 includes a stem shaft 10 inserted inside a head pipe 4. The front fork 9 is supported so as to be turnable rightward and leftward around the centerline of the head pipe 4. Therefore, the front wheel Wf is supported by the vehicle body frame 3 via the front fork 9. The handle 11 is connected to the front fork 9 at a higher position than that of the front wheel Wf. When the handle 11 is steered, the front wheel Wf and the front fork 9 turn rightward and leftward together with the handle 11. Accordingly, the saddle-type vehicle 1 is steered.

As shown in Figure 1, the saddle-type vehicle 1 includes a swing arm 13 joined to the vehicle body frame 3 via a pivot shaft 12 extending in the vehicle width direction, a rear wheel Wr supported rotatably by the swing arm 13, and a rear suspension 14 joined to the vehicle body frame 3 and the swing arm 13.

As shown in Figure 1, the swing arm 13 is swingable in the up-down direction around a pivot axis (centerline of the pivot shaft 12) with respect to the vehicle body frame 3. The swing arm 13 extends rearward from the vehicle body frame 3. The rear wheel Wr is supported rotatably by the rear end portion of the swing arm 13. The rear wheel Wr is attached to the vehicle body frame 3 via the pivot shaft 12 and the swing arm 13. The rear wheel Wr is swingable in the up-down direction around the pivot axis together with the swing arm 13 with respect to the vehicle body frame 3. The upper end portion of the rear suspension 14 is attached to the vehicle body frame 3, and the lower end portion of the rear suspension 14 is attached to the swing arm 13.

As shown in Figure 1, the saddle-type vehicle 1 includes an engine 15 (internal combustion engine) that generates power to make the saddle-type vehicle 1 travel, and a fuel tank 16 that stores fuel to be supplied to the engine 15.

As shown in Figure 1, the engine 15 is disposed between the front wheel Wf and the rear wheel Wr in the front-rear direction. The engine 15 includes a cylinder body 19 that houses a piston, a cylinder head 18 that defines the cylinder 19a together with the cylinder body 19, a head cover 17 that covers the cylinder head 18, and a crank case 20 that houses a crankshaft (not shown) together with the cylinder body 19.

As shown in Figure 1, the head cover 17, the cylinder head 18, the cylinder body 19, and the crank case 20 are arranged in the up-down direction in this order from the top. The centerline of the cylinder 19a tilts in the front-rear direction so that the upper end of the centerline of the cylinder 19a is located at a more forward position than that of the lower end of the centerline of the cylinder 19a. The cylinder head 18 defines a combustion chamber in which an air-fuel mixture burns. The power of the engine 15 is transmitted to the rear wheel Wr by a driving mechanism including a transmission member such as a chain, etc.

As shown in Figure 1, the fuel tank 16 is disposed above the engine 15 in a side view of the vehicle. The handle 11 is disposed in front of the fuel tank 16. The seat 2a and the tandem seat 2b are disposed at the rear of the fuel tank 16. The seat 2a extends rearward from the fuel tank 16 in a side view of the vehicle. The upper end portion of the fuel tank 16 is disposed at a higher position than that of the seat 2a. The pair of main frames 5 of the vehicle body frame 3 are disposed at lower positions than that of the upper end portion of the fuel tank 16. The fuel tank 16 is supported by the vehicle body frame 3. The internal space 16a of the fuel tank 16 shown by the dashed line is disposed between the pair of main frames 5.

As shown in Figure 3, the engine 15 is supported by the vehicle body frame 3 at a plurality of mount positions (positions of bolts B1 to B4). The vehicle body frame 3 includes a plurality of mount frames to which the engine 15 is mounted.

In detail, as shown in Figure 3, the vehicle body frame 3 includes a pair of right and left first mount frames 21 disposed below the down frames 6 in a side view of the vehicle, and a pair of right and left second mount frames 22 disposed at more rearward positions than that of the first mount frames 21 in a side view of the vehicle. The vehicle body frame 3 further includes a pair of right and left third mount frames 23 disposed at more rearward positions than that of the second mount frames 22 in a side view of the vehicle, and a pair of right and left fourth mount frames 24 disposed at lower positions than that of the third mount frames 23 in a side view of the vehicle.

As shown in Figure 3, the first mount frames 21 and the second mount frames 22 are disposed at higher positions than that of the third mount frames 23 and the fourth mount frames 24. The third mount frames 23 are disposed at higher positions than that of the pivot shaft 12, and the fourth mount frames 24 are disposed at lower positions than that of the pivot shaft 12. As shown in Figure 2, the pair of first mount frames 21 are disposed on the right and left of the center WO in the width direction, respectively. The pair of first mount frames 21 are disposed at positions bilaterally symmetric about the center WO in the width direction. The same applies to the second mount frames 22, the third mount frames 23, and the fourth mount frames 24.

As shown in Figure 2, the first mount frames 21 have, for example, cylindrical shapes extending in the vehicle width direction. The first mount frames 21 are fixed to the down frames 6 while being in postures parallel to the vehicle width direction by, for example, welding. The first mount frames 21 may be integrated with the down frames 6, respectively. The pair of first mount frames 21 are supported by the pair of down frames 6. As shown in Figure 3, the second mount frames 22, the third mount frames 23, and the fourth mount frames 24 are supported by the main frames 5. The second mount frames 22 may be directly fixed to the main frames 5, or may be fixed to the main frames 5 via other members. The same applies to the third mount frames 23 and the fourth mount frames 24.

As shown in Figure 2, the cylinder head 18 is disposed between the pair of first mount frames 21 in the vehicle width direction. Similarly, the cylinder head 18 is disposed between the pair of second mount frames 22 in the vehicle width direction. As shown in Figure 3, the cylinder body 19 is disposed at a lower position than that of the first mount frames 21 and the second mount frames 22. The crank case 20 is disposed between the pair of third mount frames 23 in the vehicle width direction. Similarly, the crank case 20 is disposed between the pair of fourth mount frames 24 in the vehicle width direction. The engine 15 overlaps the mount frames 21 to 24 in a side view of the vehicle.

As shown in Figure 3, the first mount frame 21 is joined to the cylinder head 18 by a bolt B1, and the second mount frame 22 is joined to the cylinder head 18 by a bolt B2. The third mount frame 23 is joined to the crank case 20 by a bolt B3, and the fourth mount frame 24 is joined to the crank case 20 by a bolt B4.

As described below, the first mount frame 21 is joined to the cylinder head 18 by the bolt B1 via a damper mount 27 including an elastic body 34. Accordingly, the vehicle body frame 3 supports the engine 15 via the damper mount 27. Therefore, the engine 15 is elastically supported by the first mount frame 21, and is movable with respect to the first mount frame 21 in a range in which the elastic body 34 is elastically deformable.

As shown in Figure 1, the first mount frame 21 is disposed foremost among the four mount frames (the first mount frame 21, the second mount frame 22, the third mount frame 23, and the fourth mount frame 24). The distance from the handle 11 to the first mount frame 21 is shortest among the distances from the handle 11 to the mount frames 21 to 24. The mount position of the engine 15 to the first mount frame 21 is foremost among the four mount positions. The damper mount 27 is interposed between the cylinder head 18 and the first mount frame 21. Therefore, the damper mount 27 is disposed at the foremost mount position among the four mount positions.

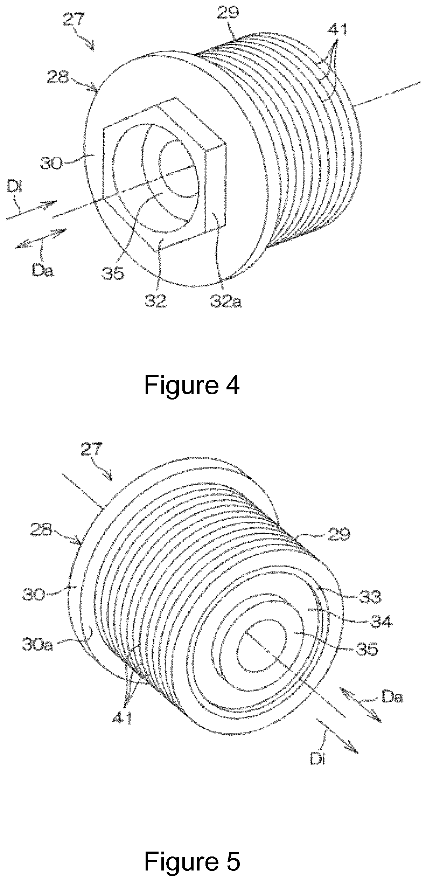

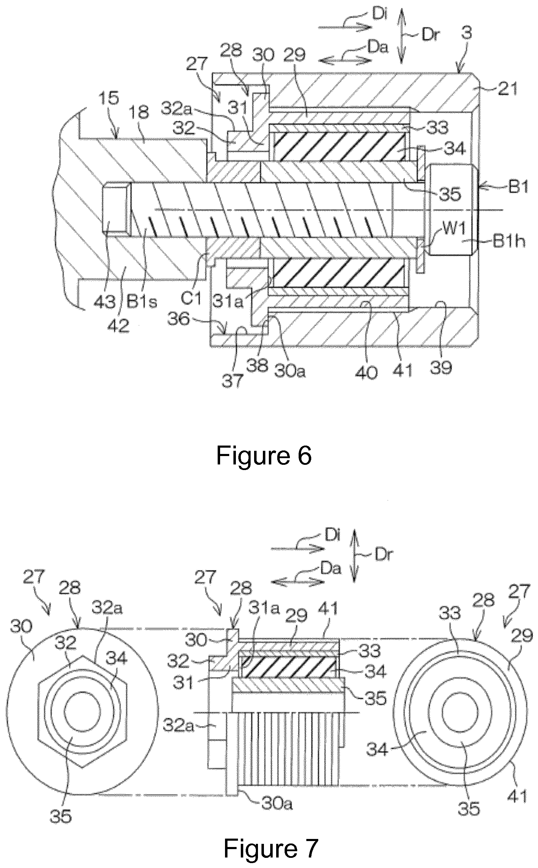

As shown in Figure 4 and Figure 5, the saddle-type vehicle 1 includes the cylindrical damper mount 27. As shown in Figure 6, the damper mount 27 is disposed between the engine 15 and the vehicle body frame 3. The saddle-type vehicle 1 includes the mount bolt B1 that joins the engine 15 and the vehicle body frame 3 via the damper mount 27. The saddle-type vehicle 1 may further include a collar C1 and a washer W1 to be attached to the mount bolt B1.

As shown in Figure 6, the damper mount 27 is cylindrical. The mount bolt B1 is inserted into the damper mount 27. The damper mount 27 is joined to the engine 15 and the vehicle body frame 3 while being in a posture in which the centerline of the damper mount 27 is parallel to the vehicle width direction. The damper mount 27 is housed in a mount housing hole 36 provided in the first mount frame 21 of the vehicle body frame 3. The damper mount 27 is joined to a cylindrical mount attaching portion 42 provided on the cylinder head 18 of the engine 15 by the mount bolt B1.

As shown in Figure 6, the damper mount 27 includes a cylindrical mount housing 28, a cylindrical outer cylinder 33 disposed inside the mount housing 28, a cylindrical elastic body 34 disposed inside the outer cylinder 33, and a cylindrical inner cylinder 35 disposed inside the elastic body 34. The mount housing 28 is joined to one of the engine 15 and the vehicle body frame 3, and the inner cylinder 35 is joined to the other one of the engine 15 and the vehicle body frame 3. Figure 6 shows an example in which the mount housing 28 is joined to the vehicle body frame 3, and the inner cylinder 35 is joined to the engine 15.

As shown in Figure 7, the mount housing 28 includes a cylindrical portion 29 that has a cylindrical shape to house the outer cylinder 33, the elastic body 34, and the inner cylinder 35, and a cylindrical tool attaching portion to which a tool is attached when screwing the damper mount 27 to the vehicle body frame 3. The mount housing 28 further includes a toric outer flange portion 30 projecting outward in the radial direction Dr of the damper mount 27 from the cylindrical portion 29, and a toric inner flange portion 31 projecting inward in the radial direction Dr of the damper mount 27 from the cylindrical portion 29.

As shown in Figure 6, the cylindrical portion 29, the tool attaching portion 32, the outer flange portion 30, and the inner flange portion 31 are coaxial. The outer flange portion 30 is disposed around the inner flange portion 31. The outer flange portion 30 and the inner flange portion 31 are arranged in the radial direction Dr of the damper mount 27. The cylindrical portion 29 and the tool attaching portion 32 are disposed on the sides opposite to each other with respect to the outer flange portion 30 and the inner flange portion 31. The cylindrical portion 29 and the tool attaching portion 32 extend in the axial direction Da of the damper mount 27. The cylindrical portion 29 is longer in the axial direction Da of the damper mount 27 than the tool attaching portion 32. The cylindrical portion 29 is housed in a small-diameter portion 39 of the mount housing hole 36. The tool attaching portion 32, the outer flange portion 30, and the inner flange portion 31 are housed in a large-diameter portion 37 of the mount housing hole 36. The large-diameter portion 37 of the mount housing hole 36 has a diameter larger than that of the small-diameter portion 39 of the mount housing hole 36.

As shown in Figure 6, the cylindrical portion 29 of the mount housing 28 includes a cylindrical outer peripheral surface on which a male screw 41 to be screwed to a female screw 40 provided on the vehicle body frame 3 is provided. The female screw 40 is provided on the inner peripheral surface of the small-diameter portion 39 of the mount housing hole 36. The male screw 41 is fitted to the female screw 40 in the screw insertion direction Di. The screw insertion direction Di is one direction of the axial direction Da of the damper mount 27, from the root portion of the cylindrical portion 29 (the end portion on the tool attaching portion 32 side) toward the tip end portion of the cylindrical portion 29 (the end portion on the side opposite to the tool attaching portion 32). The cylindrical portion 29 is joined to the vehicle body frame 3 by the male screw 41 and the female screw 40. Accordingly, the mount housing 28 is joined to the vehicle body frame 3.

As shown in Figure 6, the outer diameter of the outer flange portion 30 of the mount housing 28 is larger than the outer diameter of the cylindrical portion 29. The annular axially end surface 30a of the outer flange portion 30 is disposed at a more outward position in the radial direction Dr of the damper mount 27 than the outer peripheral surface of the cylindrical portion 29. The axially end surface 30a of the outer flange portion 30 faces a stopper portion 38 provided on the first mount frame 21 of the vehicle body frame 3 in the screw insertion direction Di. The outer flange portion 30 is disposed between the mount attaching portion 42 and the stopper portion 38 in the vehicle width direction (the right-left direction in Figure 6). Similarly, the tool attaching portion 32 is disposed between the mount attaching portion 42 and the stopper portion 38 in the vehicle width direction.

Figure 6 shows a state where the damper mount 27 is disposed at a joining position at which the damper mount 27 is joined to the vehicle body frame 3. At the joining position, the axially end surface 30a of the outer flange portion 30 of the mount housing 28 is in contact with the stopper portion 38 of the vehicle body frame 3. Therefore, the mount housing 28 is restricted from moving in the screw insertion direction Di by the contact between the outer flange portion 30 and the stopper portion 38.

As shown in Figure 6, the inner diameter of the inner flange portion 31 of the mount housing 28 is smaller than the inner diameter of the cylindrical portion 29. The annular axially end surface 31a of the inner flange portion 31 is disposed at a more inward position in the radial direction Dr of the damper mount 27 than the inner peripheral surface of the cylindrical portion 29. The inner diameter of the inner flange portion 31 is smaller than the inner diameter of the outer cylinder 33 and larger than the outer diameter of the inner cylinder 35. The axially end surface 31a of the inner flange portion 31 faces the outer cylinder 33 and the elastic body 34 in the axial direction Da of the damper mount 27.

As shown in Figure 6, the axially end surface of the outer cylinder 33 is in contact with the axially end surface 31a of the inner flange portion 31 as an axially locating portion. The axially end surface of the elastic body 34 is away from the axially end surface 31a of the inner flange portion 31 in the axial direction Da of the damper mount 27. The outer cylinder 33 is restricted from moving in the direction (insertion direction of the outer cylinder 33 into the mount housing 28) opposite to the screw insertion direction Di by the contact between the axially end surface of the outer cylinder 33 and the axially end surface 31a of the inner flange portion 31. Accordingly, the outer cylinder 33 is held by the mount housing 28 at a fixed position.

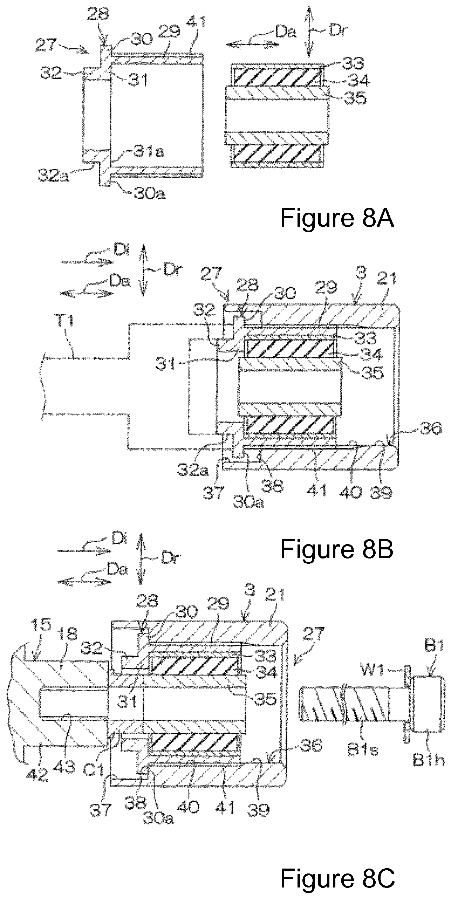

As shown in Figure 7, the tool attaching portion 32 of the mount housing 28 extends in the axial direction Da of the damper mount 27 from the inner flange portion 31. The tool attaching portion 32 includes a cylindrical inner peripheral surface with a diameter equal to the diameter of the inner peripheral surface of the inner flange portion 31, and an outer peripheral surface 32a provided with two planes parallel to each other. Figure 7 shows an example in which the outer peripheral surface 32a of the tool attaching portion 32 has a hexagonal shape in section, and three pairs of planes are provided on the outer peripheral surface 32a. A tool T1 (refer to Figure 8B) such as a socket wrench or a spanner is rotated in a state where it is attached to the outer peripheral surface 32a of the tool attaching portion 32. The tool attaching portion 32 may not have the shape shown in Figure 7 as long as the tool attaching portion has a shape to which a tool is attachable. The outer peripheral surface 32a of the tool attaching portion 32 is disposed at a more inward position in the radial direction Dr of the damper mount 27 than the outer peripheral surface of the outer flange portion 30.

As shown in Figure 7, the outer peripheral surface of the outer cylinder 33 is in contact with the inner peripheral surface of the cylindrical portion 29 of the mount housing 28. Accordingly, the outer cylinder 33 is restricted from moving in the radial direction Dr of the damper mount 27 with respect to the mount housing 28. The outer cylinder 33 is press-fitted in the cylinder portion 29. The outer diameter of the outer cylinder 33 in a free state (state before being press-fitted) is larger than the inner diameter of the cylindrical portion 29 in a free state. As shown in Figure 2, the outer diameter Df of the first mount frame 21 is smaller than the inner diameter Dh of the head pipe 4. Therefore, the outer diameter of the mount housing 28 (the outer diameter of the outer flange portion 30 of the mount housing 28, refer to Figure 6) is smaller than the inner diameter Dh of the head pipe 4. The outer cylinder 33 is press-fitted in this small member (mount housing 28).

As shown in Figure 7, the elastic body 34 is made of an elastic material such as rubber or a resin. The mount housing 28, the outer cylinder 33, and the inner cylinder 35 are made of metal. The outer peripheral surface of the elastic body 34 is in contact with the outer peripheral surface of the outer cylinder 33, and the inner peripheral surface of the elastic body 34 is in contact with the outer peripheral surface of the inner cylinder 35. The elastic body 34 is held by the outer cylinder 33 and the inner cylinder 35 by means of, for example, press-fitting or adhesion, etc. The thickness (length in the radial direction Dr of the damper mount 27) of the elastic body 34 is larger than the thicknesses of the cylindrical portion 29, the outer cylinder 33, and the inner cylinder 35. The thickness of the inner cylinder 35 is larger than the thicknesses of the cylindrical portion 29 and the outer cylinder 33. The inner cylinder 35 is longer in the axial direction than the cylindrical portion 29, the elastic body 34, and the outer cylinder 33. The cylindrical portion 29 and the outer cylinder 33 are longer in the axial direction than the elastic body 34.

As shown in Figure 6, the shaft portion B1s of the mount bolt B1 is inserted inside the inner cylinder 35. The head portion B1 h of the mount bolt B1 is disposed on the outer side of the inner cylinder 35 in the vehicle width direction. The mount attaching portion 42 is disposed on the inner side of the inner cylinder 35 in the vehicle width direction. The washer W1 is disposed between the inner cylinder 35 and the head portion B1h of the mount bolt B1. The collar C1 is disposed between the inner cylinder 35 and the mount attaching portion 42. The shaft portion B1s of the mount bolt B1 projects in the axial direction Da of the damper mount 27 from the collar C1. The projecting portion of the mount bolt B1 is inserted in a bolt insertion hole 43 of the mount attaching portion 42. The male screw of the mount bolt B1 is fitted to the female screw provided on the bolt insertion hole 43. The inner cylinder 35 is pressed against the mount attaching portion 42 by the head portion B1h of the mount bolt B1. Accordingly, the inner cylinder 35 is fixed to the engine 15.

As shown in Figure 8A, when assembling the damper mount 27, the outer cylinder 33, the elastic body 34, and the inner cylinder 35 are integrated. The outer cylinder 33 is press-fitted into the mount housing 28 by using a jig or machine for press-fitting. In detail, the outer cylinder 33 is press-fitted in the axial direction Da of the damper mount 27 into the cylindrical portion 29 of the mount housing 28 in a state where inner cylinder 35 and the elastic body 34 are held by the outer cylinder 33. The outer cylinder 33 is pressed into the mount housing 28 until the axially end surface of the outer cylinder 33 comes into contact with the axially end surface 31a of the inner flange portion 31 as an axially locating portion. Accordingly, the outer cylinder 33 is restricted from moving in the insertion direction of the outer cylinder 33 into the mount housing 28 (the leftward direction in Figure 8A).

Next, as shown in Figure 8B, the male screw 41 of the mount housing 28 is inserted in the screw insertion direction Di into the female screw 40 of the vehicle body frame 3, and the tip end portion (right end portion in Figure 8B) of the male screw 41 of the mount housing 28 is fitted to the female screw 40 of the vehicle body frame 3. At this time, a tool T1 is attached to the tool attaching portion 32 of the mount housing 28, and the tool T1 is rotated around the centerline of the damper mount 27. Accordingly, the male screw 41 of the mount housing 28 gradually moves in the screw insertion direction Di with respect to the female screw 40 of the vehicle body frame 3, and the mount housing 28 gradually approaches the joining position at which the mount housing 28 is joined to the vehicle body frame 3. Then, when the damper mount 27 reaches the joining position (position shown in Figure 8C), by the contact between the outer flange portion 30 of the mount housing 28 and the stopper portion 38 of the vehicle body frame 3, the mount housing 28 is restricted from moving in the screw insertion direction Di. Accordingly, the mount housing 28 is positioned at the joining position.

Next, as shown in Figure 8C, the mount attaching portion 42 of the engine 15 is disposed on the inner side of the damper mount 27 in the vehicle width direction. In this state, the shaft portion B1s of the mount bolt B1 is inserted into the inner cylinder 35 of the damper mount 27 from the outer side in the vehicle width direction. The tip end portion (left end portion in Figure 8C) of the shaft portion B1s of the mount bolt B1 passes through the inside of the inner cylinder 35 and the collar C1 and is inserted into the mount attaching portion 42. Then, the male screw of the shaft portion B1s of the mount bolt B1 is fitted to the female screw provided on the inner periphery of the mount attaching portion 42. Accordingly, the inner cylinder 35 of the damper mount 27 is tightened in the axial direction Da of the damper mount 27 by the mount attaching portion 42 and the mount bolt B1, and the inner cylinder 35 is fixed to the engine 15. As a result, the engine 15 is joined to the vehicle body frame 3 via the damper mount 27.

As described above, in the first preferred embodiment, the engine 15 is supported by the vehicle body frame 3 via the damper mount 27. The mount housing 28 of the damper mount 27 is fixed to the vehicle body frame 3, and the inner cylinder 35 of the damper mount 27 is fixed to the engine 15. The mount housing 28 and the inner cylinder 35 are joined via the elastic body 34 that is elastically deformable. Accordingly, the engine 15 is elastically supported by the vehicle body frame 3. Therefore, vibrations to be transmitted between the engine 15 and the vehicle body frame 3 are damped, and vibrations of the engine 15 and the vehicle body frame 3 are reduced.

The male screw 41 of the mount housing 28 is screwed to the female screw 40 provided on the vehicle body frame 3. Therefore, as compared with clearance fit, the joint strength of the mount housing 28 to the vehicle body frame 3 is high. Further, the tool attaching portion 32 to which a tool is attached when screwing the male screw 41 to the female screw 40 is provided on the mount housing 28. Therefore, it is possible that the mount housing 28 is attached to the vehicle body frame 3 by directly attaching a general-purpose tool such as a socket wrench or spanner to the mount housing 28. Therefore, an exclusive jig, etc., are not needed, and the time to be taken for attachment can be shortened. Therefore, the mount housing 28 can be easily attached to the vehicle body frame 3.

In the first preferred embodiment, the annular outer flange portion 30 projecting outward in the radial direction from the cylindrical portion 29 is provided on the mount housing 28. Further, the stopper portion 38 that faces the outer flange portion 30 in the insertion direction (screw insertion direction Di) of the male screw 41 into the female screw 40 is provided on the vehicle body frame 3. The stopper portion 38 is disposed on the side of the screw insertion direction Di with respect to the outer flange portion 30. When the mount housing 28 reaches the joining position at which the mount housing 28 is joined to the vehicle body frame 3, the stopper portion 38 and the outer flange portion 30 come into contact with each other, and the mount housing 28 is restricted from moving in the screw insertion direction Di by the stopper portion 38. Accordingly, the mount housing 28 is reliably disposed at a desired position (joining position) by the stopper portion 38 and the outer flange portion 30. Therefore, the stability of the joint strength of the mount housing 28 to the vehicle body frame 3 can be increased.

In the first preferred embodiment, since the tool attaching portion 32 and the outer flange portion 30 are disposed between the engine 15 and the stopper portion 38, the damper mount 27 is restricted from moving in the vehicle width direction by the engine 15 and the stopper portion 38. Therefore, the damper mount 27 can be reliably held between the engine 15 and the stopper portion 38.

In the first preferred embodiment, the outer cylinder 33 to be press-fitted into the mount housing 28 is provided in the damper mount 27. The mount housing 28 is a comparatively small-sized component having an outer diameter smaller than the inner diameter Dh of the head pipe 4 of the vehicle body frame 3. Therefore, the outer cylinder 33 is press-fitted into a comparatively small-sized component. Therefore, handling of the component is easier and the press-fitting work can be more easily performed than in the case where the outer cylinder 33 is press-fitted into a large-sized component such as the vehicle body frame 3. Therefore, the load of press-fitting work can be reduced.

In the first preferred embodiment, the inner cylinder 35 and the elastic body 34 are held by the outer cylinder 33, and the outer cylinder 33, the elastic body 34, and the inner cylinder 35 are integrated together. When assembling the damper mount 27, this integrated unit is attached to the mount housing 28. That is, the outer cylinder 33 is press-fitted into the mount housing 28 in a state where the inner cylinder 35 and the elastic body 34 are held by the outer cylinder 33. Thus, the inner cylinder 35 and the elastic body 34 can be disposed inside the mount housing 28 by just press-fitting the outer cylinder 33 into the mount housing 28, so that the load of assembling work can be reduced.

In the first preferred embodiment, the engine 15 is mounted to the vehicle body frame 3 at a plurality of mount positions (positions of the bolts B1 to B4) away from each other in the front-rear direction. The damper mount 27 is disposed at the foremost mount position among the plurality of mount positions. The handle 11 is disposed at a more forward position than that of the engine 15. Accordingly, the damper mount 27 is disposed at a position closest to the handle 11 among the plurality of mount positions. Therefore, vibrations to be transmitted from the engine 15 to the handle 11 via the vehicle body frame 3 can be effectively reduced. Accordingly, vibrations to be transmitted from the handle 11 to a driver can be reduced, and the comfort of the driver can be improved.

In the first preferred embodiment, the mount housing 28 is joined to the vehicle body frame 3. The mount frames 21 to 24 of the vehicle body frame 3 to which the engine 15 is mounted are disposed on the outer side of the engine 15 in the vehicle width direction. Therefore, in the case where the mount housing 28 is joined to the engine 15, unless the engine 15 is detached from the vehicle body frame 3, it is difficult to detach the mount housing 28 from the mount housing 28. On the other hand, in the case where the mount housing 28 is joined to the vehicle body frame 3, the damper mount 27 can be disposed so that the damper mount 27 can be detached without detaching the engine 15 from the vehicle body frame 3. Therefore, the damper mount 27 can be easily replaced.

In the first preferred embodiment, the first mount frame 21 of the vehicle body frame 3 is disposed on the outer side of the engine 15 in the vehicle width direction, and to this first mount frame 21, the mount housing 28 is fixed. The first mount frame 21 is fixed to the down frame 6 extending rearward and downward from the head pipe 4 supporting the front fork 9. Therefore, the first mount frame 21 is disposed at a position comparatively close to the handle 11. Since the damper mount 27 is fixed to the first mount frame 21, the damper mount 27 is disposed at a position comparatively close to the handle 11. Accordingly, vibrations to be transmitted from the engine 15 to the handle 11 via the vehicle body frame 3 can be effectively reduced.

In the first preferred embodiment, the damper mount 27 overlaps the cylinder head 18 in a side view of the vehicle. An air-fuel mixture burns in the combustion chamber of the cylinder head 18, so that the cylinder head 18 vibrates. Therefore, the damper mount 27 is disposed close to the source of the vibration. Therefore, vibrations to be transmitted between the engine 15 and the vehicle body frame 3 can be effectively attenuated.

### Second Preferred Embodiment

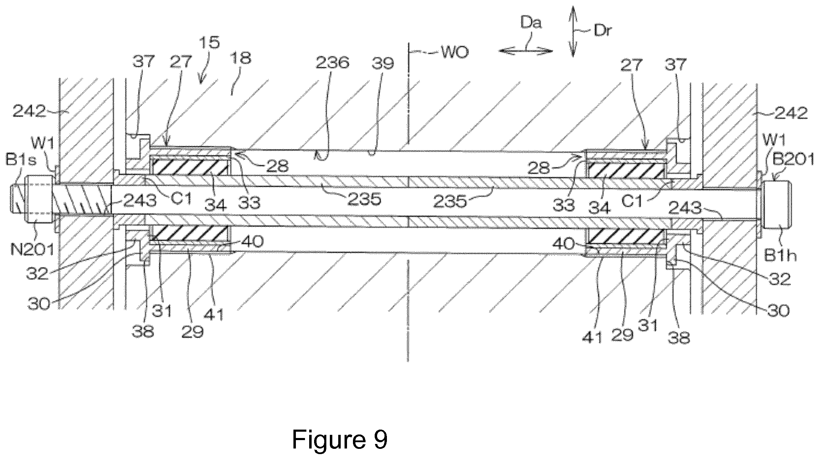

Next, a second preferred embodiment of the present invention is described. In Figure 9 described below, the components equivalent to the portions shown in Figure 1 to Figure 8C described above are designated by the same reference characters as in Figure 1, etc., and description thereof is omitted.

A main difference between the first preferred embodiment and the second preferred embodiment is in that the member to be joined to the mount housing and the inner cylinder differs. In detail, in the first preferred embodiment, the mount housing is joined to the vehicle body frame, and the inner cylinder is joined to the engine, and on the other hand, in the second preferred embodiment, the mount housing is joined to the engine, and the inner cylinder is joined to the vehicle body frame.

As shown in Figure 9, two damper mounts 27 are housed in a mount housing hole 236 provided in the engine 15. Two inner cylinders 235 are joined to a pair of right and left mount attaching portions 242 disposed on the outer sides in the vehicle width direction of the engine 15. The mount housing hole 236 penetrates through the engine 15 in the vehicle width direction (the right-left direction in Figure 9), and is opened to the right side surface and the left side surface of the engine 15. The mount housing hole 236 includes a small-diameter portion 39 extending in the vehicle width direction, and large-diameter portions 37 extending outward in the vehicle width direction from the right end and the left end of the small-diameter portion 39.

As shown in Figure 9, two damper mounts 27 are inserted in the mount housing hole 236 from the outer sides in the vehicle width direction of the engine 15, respectively. The tool attaching portion 32, the outer flange portion 30, and the inner flange portion 31 of the mount housing 28 are disposed inside the large-diameter portion 37 of the mount housing hole 236. The cylindrical portion 29 of the mount housing 28 is disposed inside the small-diameter portion 39 of the mount housing hole 236. Similarly, the outer cylinder 33 and the elastic body 34 are disposed inside the small-diameter portion 39 of the mount housing hole 236. The inner cylinder 235 projects inward in the vehicle width direction from the mount housing 28. The inner end portions of the two inner cylinders 235 are butted against each other on the inner sides in the vehicle width direction relative to the two damper mounts 27, and are in contact with each other. The two inner cylinders 235 are not limited to separate members, but may be an integral member extending in the vehicle width direction from one damper mount 27 to the other damper mount 27.

As shown in Figure 9, the shaft portion B1s of the mount bolt B201 is inserted in a bolt insertion hole 243 provided in one mount attaching portion 242 (the right mount attaching portion 242 in Figure 9) from the outer side in the vehicle width direction. The shaft portion B1s of the mount bolt B201 further passes through the mount housing hole 236 of the engine 15 and is inserted in a bolt insertion hole 243 provided in the other mount attaching portion 242 (the left mount attaching portion 242 in Figure 9). The shaft portion B1s of the mount bolt B201 projects outward in the vehicle width direction from the other mount attaching portion 242.

As shown in Figure 9, the mount nut N201 is attached to the projecting portion of the mount bolt B201 projecting from the other mount attaching portion 242 (the left mount attaching portion 242 in Figure 9). Accordingly, the two mount attaching portions 242 are tightened in the vehicle width direction by the mount bolt B201 and the mount nut N201. Therefore, the two inner cylinders 235 are tightened in the vehicle width direction by the two mount attaching portions 242 via two collars C1. Accordingly, the inner cylinders 235 are fixed to the two mount attaching portions 242 of the vehicle body frame 3. As a result, the engine 15 is joined to the vehicle body frame 3 via the damper mounts 27.

As described above, in the second preferred embodiment, the mount housings 28 are joined to the engine 15. That is, the male screw 41 of the mount housing 28 is screwed to the female screw 40 provided on the engine 15. The engine 15 is smaller than the vehicle body frame 3. If the component to which the mount housings 28 are screwed is large, the workability may be deteriorated. Therefore, the workability can be improved by joining the mount housings 28 to the engine 15 that is smaller in size than the vehicle body frame 3.

### Other preferred embodiments

The first and second preferred embodiments of the present invention are described above, however, the present invention is not limited to the contents of the above-described first and second preferred embodiments, but can be variously modified within the scope of the present invention.

For example, in the preferred embodiments described above, a case where the saddle-type vehicle 1 is a sport-type motorcycle is described.
However, the saddle-type vehicle 1 may be a scooter type motorcycle including a swing unit, an off-road type motorcycle, or a moped. The saddle-type vehicle 1 is not limited to a motorcycle, but may be an all-terrain vehicle, or a snowmobile.

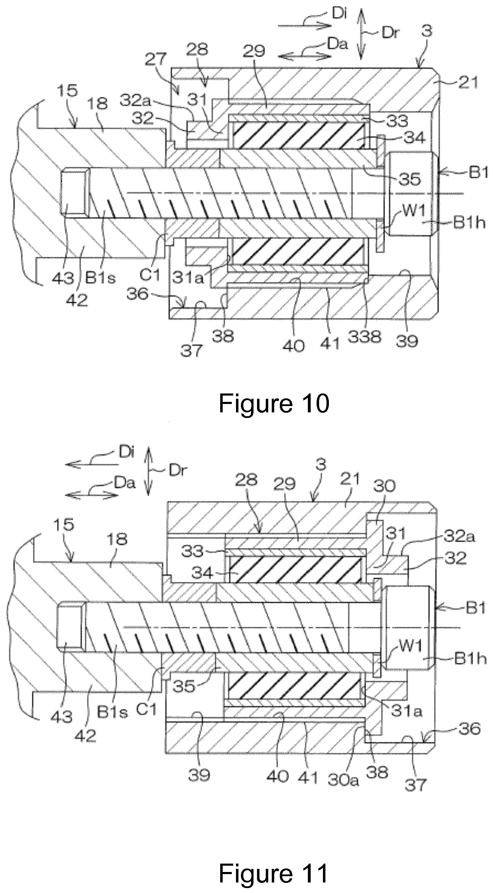

In the preferred embodiments described above, the case where the mount housing 28 has the outer flange portion 30, and the stopper portion 38 facing the outer flange portion 30 is provided on the engine 15 or the vehicle body frame 3, is described. However, as shown in Figure 10, it is also possible that the outer flange portion 30 is omitted, and a stopper portion 338 is provided on the small-diameter portion 39 of the mount housing hole 36. In this case, the mount housing 28 is positioned in the screw insertion direction Di by contact of the axially end surface of the cylindrical portion 29 with the stopper portion 338.

In the preferred embodiments described above, the case where the tool attaching portion 32 and the outer flange portion 30 are disposed between the engine 15 and the stopper portion 38 in the vehicle width direction is described. However, as shown in Figure 11, the tool attaching portion 32 and the outer flange portion 30 may be disposed on the outer side of the engine 15 and the stopper portion 38 in the vehicle width direction.

With this arrangement, the tool attaching portion 32 and the outer flange portion 30 are disposed on the outer side of the engine 15 and the stopper portion 38 in the vehicle width direction, so that the tool attaching portion 32 and the outer flange portion 30 are not restricted from moving outward in the vehicle width direction by the engine 15 and the stopper portion 38. Accordingly, the damper mount 27 can be detached from the saddle-type vehicle 1 without detaching the engine 15 from the vehicle body frame 3. Therefore, the loads of maintenance work to replace the existing damper mount 27 with a new damper mount and tuning work to replace the existing damper mount 27 with a damper mount with different damper characteristics are reduced.

In the preferred embodiments described above, the case where the outer cylinder 33 is press-fitted into the mount housing 28 in a state where the inner cylinder 35 and the elastic body 34 are held by the outer cylinder 33 is described. However, it is also possible that the inner cylinder 35 and the elastic body 34 are inserted into the outer cylinder 33 separately or together after the outer cylinder 33 is press-fitted into the mount housing 28.

In the preferred embodiments described above, the case where the damper mount 27 includes the outer cylinder 33 is described. However, it is also possible that the outer cylinder 33 is omitted, and the outer peripheral surface of the elastic body 34 is in contact with the inner peripheral surface of the cylindrical portion 29 of the mount housing 28.

In the preferred embodiments described above, the case where the damper mount 27 is interposed between the engine 15 and the first mount frame 21 is described. However, it is also possible that the damper mount 27 is interposed between a mount frame (at least one of the second mount frame 22, the third mount frame 23, and the fourth mount frame 24) other than the first mount frame 21 and the engine 15.

In the preferred embodiments described above, the case where the damper mount 27 overlaps the cylinder head 18 in a side view of the vehicle is described. However, the damper mount 27 may overlap the head cover 17 in a side view of the vehicle.

Among all preferred embodiments described above, two or more may be combined.

Various other design changes are possible within the scope of the matters described in the claims.

The present application corresponds to Japanese Patent Application No. 2013-241567 filed on November 22, 2013, in the Japan Patent Office.

### Description of the Reference Characters

- 1:: saddle-type vehicle
- 2a:: Seat
- 3:: Vehicle body frame
- 4:: Head pipe
- 5:: Main frame
- 6:: Down frame
- 15:: Engine
- 16:: Fuel tank
- 21:: First mount frame
- 27:: Damper mount
- 28:: Mount housing
- 29:: Cylindrical portion
- 30:: Outer flange portion
- 31:: Inner flange portion
- 32:: Tool attaching portion
- 33:: Outer cylinder
- 34:: Elastic body
- 35:: Inner cylinder
- 36:: Mount housing hole
- 38:: Stopper portion
- 40:: Female screw
- 41:: Male screw
- 42:: Mount attaching portion
- 235:: Inner cylinder
- 236:: Mount housing hole
- 242:: Mount attaching portion
- 338:: Stopper portion
- B1:: Mount bolt
- B1h:: Head portion
- B1s:: Shaft portion
- B201:: Mount bolt
- Di:: Screw insertion direction
- T1:: Tool

## Claims

1. A saddle-type vehicle (1) comprising:
an engine (15);
a damper mount (27) attached to the engine (15); and
a vehicle body frame (3) that supports the engine (15) via the damper mount (27), wherein
the damper mount (27) includes:
a cylindrical mount housing (28) joined to one of the engine (15) and the vehicle body frame (3),
a cylindrical elastic body (34) disposed inside the mount housing (28), and
an inner cylinder (35,235) that is disposed inside the elastic body (34) and joined to the other one of the engine (15) and the vehicle body frame (3), and
the mount housing (28) includes:
a cylindrical portion (29), and
an annular outer flange portion (30) that projects outward in a radial direction (Dr) from the cylindrical portion (29), wherein
one of the engine (15) and the vehicle body frame (3) includes a stopper portion (38,338) that opposes the outer flange portion (30), and
the stopper portion (38,338) restricts the mount housing (28) from moving in the screw insertion direction (Di) by contact with the outer flange portion (30) when the mount housing (28) reaches a joining position at which the mount housing (28) is joined to one of the engine (15) and the vehicle body frame (3),**characterised in that**
the mount housing further includes:
a male screw (41) screwed to a female screw (40) provided on one of the engine (15) and the vehicle body frame (3),
a tool attaching portion (32) to which a tool is attached when screwing the male screw (41) to the female screw (40), and **in that**
the male screw (41) is provided on an outer periphery of the cylindrical portion, and
the stopper portion (38, 338) opposes the outer flange portion (30) in a screw insertion direction(Di) of the male screw (41) into the female screw (40).

2. The saddle-type vehicle (1) according to Claim 1, wherein the tool attaching portion (32) and the outer flange portion (30) are disposed between the engine (15) and the stopper portion (38) with respect to a vehicle width direction.

3. The saddle-type vehicle (1) according to Claim 1, wherein the tool attaching portion (32) and the outer flange portion (30) are disposed on an outer side of the engine (15) and the stopper portion (38) with respect to a vehicle width direction.

4. The saddle-type vehicle (1) according to any one of Claims 1 to 3, wherein the damper mount (27) further includes an outer cylinder (33) that is disposed between the mount housing (28) and the elastic body (34) and press-fitted into the mount housing (28).

5. The saddle-type vehicle (1) according to Claim 4, wherein the outer cylinder (33) is press-fitted into the mount housing (28) in a state where the inner cylinder (35,235) and the elastic body (34) are held by the outer cylinder (33).

6. The saddle-type vehicle (1) according to any one of Claims 1 to 5, wherein
the engine (15) is mounted to the vehicle body frame (3) at a plurality of mount positions away from each other in a front-rear direction, and
the damper mount (27) is disposed at the foremost mount position among the plurality of mount positions.

7. The saddle-type vehicle (1) according to any one of Claims 1 to 6, wherein
the mount housing (28) is joined to the vehicle body frame (3), and
the inner cylinder (35,235) is joined to the vehicle body frame (3) via the mount housing (28).

8. The saddle-type vehicle (1) according to Claim 7, wherein
the vehicle body frame (3) includes a head pipe (4) that supports a front fork (9), a down frame (6) extending rearward and downward from the head pipe (4), and a first mount frame (21) fixed to the down frame (6) and disposed on a lateral side of the engine (15), and
the mount housing (28) is fixed to the first mount frame (21).

9. The saddle-type vehicle (1) according to any one of Claims 1 to 6, wherein
the mount housing (28) is joined to the engine (15), and
the inner cylinder (35,235) is joined to the engine (15) via the mount housing (28).

10. The saddle-type vehicle (1) according to any one of Claims 1 to 9, wherein
the engine (15) includes a cylinder head (18) that defines a combustion chamber in which an air-fuel mixture burns, and a head cover (17) attached to the cylinder head (18), and
the damper mount (27) overlaps one of the cylinder head (18) and the head cover (17) in a side view of the vehicle.

## Patentansprüche

1. Sattelfahrzeug (1), das Folgendes umfasst:
einen Motor (15),
eine Dämpferanbringung (27), die an dem Motor (15) befestigt ist, und
einen Fahrzeug-Aufbaurahmen (3), der den Motor (15) über die Dämpferanbringung (27) trägt, wobei
die Dämpferanbringung (27) Folgendes einschließt:
ein zylindrisches Anbringungsgehäuse (28), das mit dem einen von dem Motor (15) und dem Fahrzeug-Aufbaurahmen (3) verbunden ist,
einen zylindrischen elastischen Körper (34), der innerhalb des Anbringungsgehäuses (28) angeordnet ist, und
einen inneren Zylinder (35, 235), der innerhalb des elastischen Körpers (34) angeordnet und mit dem anderen von dem Motor (15) und dem Fahrzeug-Aufbaurahmen (3) verbunden ist, und
das Anbringungsgehäuse (28) Folgendes einschließt:
einen zylindrischen Abschnitt (29) und
einen ringförmigen äußeren Flanschabschnitt (30), der in einer Radialrichtung (Dr) von dem zylindrischen Abschnitt (29) aus vorspringt, wobei
eines von dem Motor (15) und dem Fahrzeug-Aufbaurahmen (3) einen Anschlagabschnitt (38, 338) einschließt, der dem äußeren Flanschabschnitt (30) gegenüberliegt, und
der Anschlagabschnitt (38, 338) das Anbringungsgehäuse (28) durch Berührung mit dem äußeren Flanschabschnitt (30) daran hindert, sich in der Schraubeneinführungsrichtung (Di) zu bewegen, wenn das Anbringungsgehäuse (28) eine Verbindungsposition erreicht, an der das Anbringungsgehäuse (28) mit einem von dem Motor (15) und dem Fahrzeug-Aufbaurahmen (3) verbunden wird, **dadurch gekennzeichnet, dass**
das Anbringungsgehäuse ferner Folgendes einschließt:
eine Außengewindeschraube (41), die an eine Innengewindeschraube (40) geschraubt ist, die an einem von dem Motor (15) und dem Fahrzeug-Aufbaurahmen (3) bereitgestellt wird,
einen Werkzeugbefestigungsabschnitt (32), an dem ein Werkzeug befestigt wird, wenn die Außengewindeschraube (41) an die Innengewindeschraube (40) geschraubt wird, und dadurch, dass
die Außengewindeschraube (41) an einem Außenumfang des zylindrischen Abschnitts bereitgestellt wird und
der Anschlagabschnitt (38, 338) dem äußeren Flanschabschnitt (30) in einer Schraubeneinführungsrichtung (Di) der Außengewindeschraube (41) in die Innengewindeschraube (40) gegenüberliegt.

2. Sattelfahrzeug (1) nach Anspruch 1, wobei der Werkzeugbefestigungsabschnitt (32) und der äußere Flanschabschnitt (30) in Bezug auf eine Fahrzeugbreitenrichtung zwischen dem Motor (15) und dem Anschlagabschnitt (38) angeordnet sind.

3. Sattelfahrzeug (1) nach Anspruch 1, wobei der Werkzeugbefestigungsabschnitt (32) und der äußere Flanschabschnitt (30) in Bezug auf eine Fahrzeugbreitenrichtung auf einer Außenseite des Motors (15) und des Anschlagabschnitts (38) angeordnet sind.

4. Sattelfahrzeug (1) nach einem der Ansprüche 1 bis 3, wobei die Dämpferanbringung (27) ferner einen äußeren Zylinder (33) einschließt, der zwischen dem Anbringungsgehäuse (28) und dem elastischen Körper (34) angeordnet und in das Anbringungsgehäuse (28) eingepresst ist.

5. Sattelfahrzeug (1) nach Anspruch 4, wobei der äußere Zylinder (33) in einem Zustand in das Anbringungsgehäuse (28) eingepresst ist, in dem der innere Zylinder (35, 235) und der elastische Körper (34) durch den äußeren Zylinder (33) gehalten werden.

6. Sattelfahrzeug (1) nach einem der Ansprüche 1 bis 5, wobei
der Motor (15) an dem Fahrzeug-Aufbaurahmen (3) an mehreren Anbringungspositionen, die in einer Richtung von vorn nach hinten voreinander entfernt sind, angebracht ist, und
die Dämpferanbringung (27) an der vordersten Anbringungsposition unter den mehreren Anbringungspositionen angeordnet ist.

7. Sattelfahrzeug (1) nach einem der Ansprüche 1 bis 6, wobei
das Anbringungsgehäuse (28) mit dem Fahrzeug-Aufbaurahmen (3) verbunden ist und
der innere Zylinder (35, 235) über das Anbringungsgehäuse (28) mit dem Fahrzeug-Aufbaurahmen (3) verbunden ist.

8. Sattelfahrzeug (1) nach Anspruch 7, wobei
der Fahrzeug-Aufbaurahmen (3) ein Kopfrohr (4), das eine Vordergabel (9) stützt, einen unteren Rahmen (6), der sich von dem Kopfrohr (4) nach hinten und nach unten erstreckt, und einen ersten Anbringungsrahmen (21), der an dem unteren Rahmen (6) befestigt und auf einer seitlichen Seite des Motors (15) angeordnet ist, einschließt und
das Anbringungsgehäuse (28) an dem ersten Anbringungsrahmen (21) befestigt ist.

9. Sattelfahrzeug (1) nach einem der Ansprüche 1 bis 6, wobei das Anbringungsgehäuse (28) mit dem Motor (15) verbunden ist und
der innere Zylinder (35, 235) über das Anbringungsgehäuse (28) mit dem Motor (15) verbunden ist.

10. Sattelfahrzeug (1) nach einem der Ansprüche 1 bis 9, wobei
der Motor (15) einen Zylinderkopf (18), der eine Verbrennungskammer definiert, in der ein Luft-Kraftstoff-Gemisch verbrennt, und eine Kopfabdeckung (17), die an dem Zylinderkopf (18) befestigt ist, einschließt und
die Dämpferanbringung (27) in einer Seitenansicht des Fahrzeugs eines von dem Zylinderkopf (18) und der Kopfabdeckung (17) überlappt.

## Revendications

1. Véhicule de type à selle (1) comprenant :
un moteur (15) ;
un support d'amortisseur (27) fixé au moteur (15) ; et
un cadre de carrosserie de véhicule (3) qui supporte le moteur (15) via le support d'amortisseur (27), dans lequel
le support d'amortisseur (27) comporte :
un logement de support cylindrique (28) assemblé à l'un du moteur (15) et du cadre de carrosserie de véhicule (3),
un corps élastique cylindrique (34) disposé à l'intérieur du logement de support (28), et
un cylindre interne (35, 235) qui est disposé à l'intérieur du corps élastique (34) et assemblé à l'autre du moteur (15) et du cadre de carrosserie de véhicule (3), et
le logement de moteur (28) comporte :
une partie cylindrique (29), et
une partie de rebord externe annulaire (30) qui fait saillie vers l'extérieur dans une direction radiale (Dr) à partir de la partie cylindrique (29), dans lequel
l'un du moteur (15) et du cadre de carrosserie de véhicule (3) comporte une partie formant butée (38, 338) qui est à l'opposé de la partie de rebord externe (30), et
la partie formant butée (38, 338) empêche le logement de support (28) de se déplacer dans la direction d'insertion de vis (Di) par contact avec la partie de rebord externe (30) lorsque le logement de support (28) atteint une position d'assemblage au niveau de laquelle le logement de support (28) est assemblé à l'un du moteur (15) et du cadre de carrosserie de véhicule (3), **caractérisé en ce que**
le logement de support comporte en outre :
une vis mâle (41) vissée à une vis femelle (40) prévue sur l'un du moteur (15) et du cadre de carrosserie de véhicule (3),
une partie de fixation d'outil (32) à laquelle un outil est fixé au moment du vissage de la vis mâle (41) à la vis femelle (40), et **en ce que**
la vis mâle (41) est prévue sur une périphérie externe de la partie cylindrique, et
la partie formant butée (38, 338) est à l'opposé de la partie de rebord externe (30) dans une direction d'insertion de vis (Di) de la vis mâle (41) dans la vis femelle (40).

2. Véhicule de type à selle (1) selon la revendication 1, dans lequel la partie de fixation d'outil (32) et la partie de rebord externe (30) sont disposées entre le moteur (15) et la partie formant butée (38) par rapport à une direction de largeur de véhicule.

3. Véhicule de type à selle (1) selon la revendication 1, dans lequel la partie de fixation d'outil (32) et la partie de rebord externe (30) sont disposées sur une face externe du moteur (15) et de la partie formant butée (38) par rapport à une direction de largeur de véhicule.

4. Véhicule de type à selle (1) selon l'une quelconque des revendications 1 à 3, dans lequel le support d'amortisseur (27) comporte en outre un cylindre externe (33) qui est disposé entre le logement de support (28) et le corps élastique (34) et ajusté par pression dans le logement de support (28).

5. Véhicule de type à selle (1) selon la revendication 4, dans lequel le cylindre externe (33) est ajusté par pression dans le logement de support (28) dans un état où le cylindre interne (35, 235) et le corps élastique (34) sont maintenus par le cylindre externe (33).

6. Véhicule de type à selle (1) selon l'une quelconque des revendications 1 à 5, dans lequel
le moteur (15) est monté sur le cadre de carrosserie de véhicule (3) au niveau d'une pluralité de positions à distance les unes des autres dans une direction avant-arrière, et
le support d'amortisseur (27) est disposé au niveau de la position de support la plus en avant parmi la pluralité de positions support.

7. Véhicule de type à selle (1) selon l'une quelconque des revendications 1 à 6, dans lequel
le logement de support (28) est assemblé au cadre de carrosserie de véhicule (3), et
le cylindre interne (35, 235) est assemblé au cadre de carrosserie de véhicule (3) via le logement de support (28).

8. Véhicule de type à selle (1) selon la revendication 7, dans lequel
le cadre de carrosserie de véhicule (3) comporte un tuyau de tête (4) qui supporte une fourche avant (9), un cadre inférieur (6) s'étendant vers l'arrière et vers le bas à partir du tuyau de tête (4), et un premier cadre de support (21) fixé au cadre inférieur (6) et disposé sur une face latérale du moteur (15), et
le logement de support (28) est fixé au premier cadre de support (21).

9. Véhicule de type à selle (1) selon l'une quelconque des revendications 1 à 6, dans lequel
le logement de support (28) est assemblé au moteur (15), et
le cylindre interne (35, 235) est assemblé au moteur (15) via le logement de support (28).

10. Véhicule de type à selle (1) selon l'une quelconque des revendications 1 à 9, dans lequel
le moteur (15) comporte une culasse (18) qui définit une chambre de combustion dans laquelle un mélange air-carburant entre en combustion, et un couvre-culasse (17) fixé à la culasse (18), et
le support d'amortisseur (27) chevauche l'un de la culasse (18) et du couvre-culasse (17) dans une vue latérale du véhicule.
